Europäisches Patentamt

European Patent Office

Office européen des brevets

(19)

(11) **EP 0 775 321 B1**

(12) **EUROPÄISCHE PATENTSCHRIFT**

(45) Veröffentlichungstag und Bekanntmachung des Hinweises auf die Patenterteilung:
**14.04.1999 Patentblatt 1999/15**

(21) Anmeldenummer: **95929854.8**

(22) Anmeldetag: **11.08.1995**

(51) Int Cl.⁶: **G01S 13/60**, G01C 22/00

(86) Internationale Anmeldenummer:
**PCT/EP95/03197**

(87) Internationale Veröffentlichungsnummer:
**WO 96/05520 (22.02.1996 Gazette 1996/09)**

(54) **GESCHWINDIGKEITSMESSER**

SPEEDOMETER

INDICATEUR DE VITESSE

(84) Benannte Vertragsstaaten:
**AT CH DE ES FR GB IT LI NL SE**

(30) Priorität: **12.08.1994 DE 4428663**

(43) Veröffentlichungstag der Anmeldung:
**28.05.1997 Patentblatt 1997/22**

(73) Patentinhaber:
• **Noller, Tilmann**
**80333 München (DE)**
• **Jurende, Stephan**
**80639 München (DE)**

(72) Erfinder:
• **NOLLER, Tilmann**
**D-80333 München (DE)**
• **JURENDE, Stephan**
**D-80639 München (DE)**
• **UNKRIG, Arno**
**D-80335 München (DE)**
• **GÖTZ, Robert**
**D-80686 München (DE)**

• **Kaltschmidt, Horst**
**85579 Neubiberg (DE)**
• **Christl, Rupert**
**80809 München (DE)**

(74) Vertreter: **Körber, Wolfhart, Dr. rer.nat.**
**Patentanwälte**
**Mitscherlich & Partner,**
**Sonnenstrasse 33**
**80331 München (DE)**

(56) Entgegenhaltungen:
EP-A- 0 371 346        EP-A- 0 594 119
WO-A-88/02494       WO-A-90/01707
DE-A- 3 922 165

• SIGNAL PROCESSING THEORIES AND APPLICATIONS, BRUSSELS, AUG. 24 - 27, 1992, Bd. 3, 24. August 1992 VANDEWALLE J; BOITE R; MOONEN M; OOSTERLINCK A, Seiten 1829-1832, XP 000356607 KLEINHEMPEL W ET AL 'RADAR SIGNAL PROCESSING FOR VEHICLE SPEED MEASUREMENTS'

## Beschreibung

Die vorliegende Erfindung betrifft eine Vorrichtung zum Messen der Geschwindigkeit und der zurückgelegten Wegstrecke eines sich bewegenden Benutzers oder Objektes mit einem Dopplerradar-Sensor gemäß dem beigefügten Anspruch 1.

In der modernen Freizeitgesellschaft sind tägliche Bewegung und Sport für die meisten Menschen zu einem festen Bestandteil ihres Lebens geworden. Der Sportbegeisterte kann unter einem breiten Angebot der verschiedensten Sportarten, wie z.B. Joggen, Rennradfahren, Mountainbikefahren, Reiten, Skifahren etc. wählen. Bei den meisten dieser Sportarten besteht für den Sportler allerdings nicht die Möglichkeit, seine eigene Leistung, insbesondere seine Geschwindigkeit und die zurückgelegte Wegstrecke zu messen und zu kontrollieren. Nicht nur für den Amateur, sondern insbesondere für die Profis ist es aber von größter Bedeutung, Trainingsaufwand und -intensität während dem Ausüben der Sportart ständig kontrollieren und messen zu können. Die bekanntesten und genauesten Sensoren zum Messen von Geschwindigkeiten sind die Dopplerradar-Sensoren, die auf der Grundlage des sogenannten Doppler-Effektes arbeiten, bei dem die Frequenzverschiebung zwischen einem ausgesendeten und dem reflektierten Signal direkt proportional zur Relativgeschwindigkeit zwischen dem Sensor und dem reflektierenden Objekt ist. Dabei kann sich entweder der Sensor, oder das Objekt, oder auch beide gleichzeitig bewegen.

Die WO A 88/02494 offenbart eine Vorrichtung zum Messen der Geschwindigkeit und der zurückgelegten Wegstrecke eines sich bewegenden Benutzers mit einem Dopplerradar-Sensor, der an dem sich bewegenden Benutzer befestigbar ist, Meßsignale erzeugt und einer Auswerteeinheit zuführt, die einen Sender umfaßt, der die ausgewerteten Daten einer separaten Verarbeitungs- und Anzeigeeinheit überträgt. Die vorgeschlagenen Doppler-Sensoren arbeiten auf der Basis von Ultraschallwellen oder elektromagnetischen Wellen. Wie aus dem beschriebenen Auswerteverfabren für die reflektierten Signale hervorgeht, sind die ausgestrahlten Wellenfronten der vorgeschlagenen Doppler-Sensoren relativ stark in einer Vorzugsrichtung gebündelt. Das hat zur Folge, daß das Frequenzspektrum des reflektierten Signales ein ausgeprägtes Maximum aufweist, von dem aus in Richtung höherer bzw. niedriger Frequenzen das Signal stark abfällt. In dem beschriebenen Auswerteverfahren ist die Verschiebungsfrequenz diejenige Frequenz, von der aus die Flächen links und rechts unter der Kurve des reflektierten Signales im Frequenzspektrum gleich sind. Dieses sehr einfache Auswerteverfahren setzt die Verwendung von Doppler-Sensoren mit scharfen Richtcharakteristiken voraus, da nur in diesem Fall das reflektierte Signal im Frequenzspektrum ein ausgeprägtes Maximum aufweist.

Wird die in der WO A 88/02494 vorgeschlagene Vorrichtung bei einem sich unregelmäßig oder stark hin- und herbewegenden Benutzer, wie zum Beispiel einem Läufer, verwendet, so unterliegt auch das reflektierte Signal, das heißt das Maximum im Frequenzspektrum, starken Schwankungen. Das hat zur Folge, daß das durch das beschriebene einfache Auswerteverfahren berechnete Geschwindigkeitssignal ebenfalls starken Schwankungen unterliegt und keine genauen Messungen der Geschwindigkeit und der zurückgelegten Wegstrecke gewährleistet sind.

Demgegenüber liegt die Aufgabe der vorliegenden Erfindung darin, eine Vorrichtung zum Messen der Geschwindigkeit und der zurückgelegten Wegstrecke eines sich bewegenden Benutzers oder Objektes mit einem Dopplerradar-Sensor gemäß dem Oberbegriff des beigefügten Anspruches 1 und ein Verfahren zur Bestimmung der Geschwindigkeit bzw. der zurückgelegten Wegstrecke eines sich bewegenden Benutzers oder Objektes aus von einer derartigen Vorrichtung erzeugten Meßsignalen zu liefern, die es ermöglichen, die Geschwindigkeit und die zurückgelegte Wegstrecke insbesondere bei sich unregelmäßig bzw. stark bewegenden Benutzern oder Objekten auf eine einfache und genaue Weise zu messen.

Diese Aufgabe wird durch eine Vorrichtung mit den Merkmalen des beigefügten Anspruches 1, sowie durch ein Verfahren mit den Merkmalen des beigefügten Anspruches 17 gelöst.

Vorteilhafte Ausgestaltungen der vorliegenden Erfindung sind in den jeweiligen Unteransprüchen 2 bis 16 und 18 bis 20 angegeben.

Die ausgewerteten Daten werden vorzugsweise mit Funksignalen übertragen. Es ist aber auch möglich, eine Übertragung mit Leitungen bzw. Drähten vorzusehen, oder auch den menschlichen Körper des Benutzers oder das Objekt als Übertragungsmedium zu verwenden.

Der verwendete Mikrowellenstreifenleiter-Sensor ist vorzugsweise ein Sensor des Typs, wie er z. B. in den deutschen Patentanmeldungen DE 39 41 125 und DE 39 22 165 offenbart ist. Sensoren dieser Art zeichnen sich durch eine hohe Zuverlässigkeit, hohe Genauigkeit und insbesondere durch geringes Gewicht, geringen Platzbedarf und akzeptable Herstellungskosten aus. Die Sendefrequenz des erfindungsgemäß verwendeten Mikrowellenstreifenleitersensors beträgt vorzugsweise 5,8 GHz. Der Mikrowellenstreifenleitersensor ist um 20° bis 60° aus der Bodennormalen gedreht. Ein Teil der ausgesendeten Strahlung wird beim Auftreffen auf den Boden diffus gestreut und vom Sensor wieder empfangen. Die Frequenz des empfangenen Signals ist gegenüber der Sendefrequenz verschoben. Die Differenzfrequenz $\Delta f$ ist dabei proportional zur Relativgeschwindigkeit v zwischen dem sich bewegenden Benutzer oder Objekt und dem Untergrund, und proportional zum Kosinus des Winkels $\alpha$ zwischen dem Mikrowellenstreifenleitersensor und der Bodennormalen:

$$\Delta \, f \alpha v \cdot \cos \alpha$$

Die Frequenzanalyse des Differenzfrequenzsignals zum Ermitteln der Geschwindigkeitsinformation in der Auswerteeinheit erfolgt vorteilhafterweise durch eine Fourieranalyse, oder aber einfach durch eine Nulldurchgangszählung.

Durch die räumliche Trennung von Mikrowellenstreifenleiter-Sensor und Auswerteeinheit von der Verarbeitungs- und Anzeigeeinheit ist einem sich bewegenden Benutzer die Möglichkeit gegeben, seine eigene Geschwindigkeit und seine zurückgelegte Wegstrecke bereits während des Bewegens messen und überprüfen zu können. Es ist aber auch möglich, die Geschwindigkeit und Wegstrecke eines sich bewegenden Objektes, an dem der Mikrowellenstreifenleiter-Sensor und die Auswerteeinheit angeordnet sind, zu messen, zu überprüfen und auszuwerten. Das könnte durch einen sich mit dem Objekt (z.B. Fahrrad oder Pferd) bewegenden oder auch durch einen sich nicht mitbewegenden Benutzer erfolgen, bei dem sich die Verarbeitungs- und Anzeigeeinheit befindet.

Da der Mikrowellenstreifenleiter-Sensor und die Auswerteeinheit an einem sich bewegenden Benutzer oder Objekt angeordnet sind und von diesem getragen werden, ist es vorteilhaft sie klein, leicht und tragbar auszubilden, um die Bewegung möglichst wenig zu stören und zu beeinträchtigen. Auch die separate Verarbeitungs- und Anzeigeeinheit ist möglichst klein, leicht und tragbar ausgebildet, wenn sie ebenfalls von dem sich bewegenden Benutzer getragen werden soll. Selbst wenn sich derjenige nicht bewegt, der die separate Verarbeitungs- und Anzeigeeinheit trägt, und die Geschwindigkeit und die Wegstrecke eines sich bewegenden Objektes messen will, ist es von Vorteil, die Verarbeitungs- und Anzeigeeinheit möglichst klein, leicht und tragbar auszubilden. Dieser Fall ist z.B. denkbar, wenn ein Diskusswerfer, ein Speerwerfer oder einer in einer ähnlichen Disziplin tätiger Sportler die Geschwindigkeit und die zurückgelegte Wegstrecke seines sich bewegenden Sportgerätes messen will, auch wenn er sich selber nicht bewegt.

Es ist weiterhin möglich, die Verarbeitungs- und Anzeigeeinheit stationär auszubilden und z.B. an einen Computer anzuschliessen. Das ist dann von Vorteil, wenn ein Trainer die Leistungen seines Sportlers während des Trainings überprüfen, auswerten und die gewonnenen Erkenntnisse sogleich im Training umsetzen will. Die Verarbeitungs- und Anzeigeeinheit kann dabei eine umfangreicher Software und komfortablere Bedienugs- und Darstellungsmöglichkeiten als die tragbare Ausführung aufweisen.

Es ist sinnvoll, beispielsweise bei einem Läufer, einem Schlittschuhläufer, einem Langläufer, oder sich in ähnlicher Art und Weise fortbewegendem Sportler, den Mikrowellenstreifenleiter-Sensor und die Auswerteeinheit in einem Gehäuse anzuordnen, das mit einem elastischen Gürtel, einer Schnalle, einem Clip oder einer ähnlichen Vorrichtung an dem Sportler oder dessen Kleidung befestigbar ist. Dazu bietet sich insbesondere die Hüfte an, da diese bei den genannten Fortbewegungsarten die geringsten Schwankungen zeigt. Der Sensor muß dabei in dem Gehäuse so angeordnet sein, daß seine ausgesendete Strahlung schräg auf den Boden auftrifft, wenn das Gehäuse an dem Benutzer oder dem Objekt befestigt ist.

Die separate Verarbeitungs- und Darstellungseinheit kann am sich bewegenden Benutzer z.B. durch ein Armband am Handgelenk befestigt werden, so daß der Benutzer jederzeit die gewünschten Daten abrufen und sich darstellen lassen kann.

Weiterhin ist es möglich, den Mikrowellenstreifenleiter-Sensor und die Auswerteeinheit mit einem Beschleunigungssensor, der z.B. aus einem Halbleiter bestehen kann, zu kombinieren. Dadurch wird es möglich, bei konstanter Bewegungsgeschwindigkeit des Sportlers den Mikrowellen-Sensor abzuschalten und erst bei auftretenden Geschwindigkeitsänderungen, die durch den Beschleunigungssensor erfaßt werden, wieder zu aktivieren, wodurch sich der Stromverbrauch der erfindungsgemäßen Vorrichtung stark verringern läßt.

Weiterhin könnte zusätzlich ein temperaturkompensierter Drucksensor zur Luftdruckmessung integriert werden, um Druckänderungen bzw. zurückgelegte Höhenunterschiede zu messen. Da ein zu messendes Geschwindigkeitssignal mit $\cos\alpha$ vom Neigungswinkel $\alpha$ zwischen dem Radarstrahl und der reflektierenden Oberfläche abhängt, können durch die Verwendung eines integrierten Höhenmessers Meßfehler, die durch eine Neigung des Untergrundes entstehen, kompensiert werden. Das ist z.B. für Bergsteiger und Wanderer von besonderer Wichtigkeit. Aus der zurückgelegten Höhendifferenz und der gemessenen Geschwindigkeit läßt sich dann die Neigung des Untergrundes bestimmen und daraus der wahre Geschwindigkeitswert errechnen. Durch den Drucksensor lassen sich dann auch die zurückgelegte Höhendifferenz und die Aufstiegs- und Abstiegsgeschwindigkeit bestimmen und anzeigen bzw. aufzeichnen.

Die erfindungsgemäße Vorrichtung kann weiterhin so ausgebildet sein, daß alle in einer bestimmten Zeitspanne in der Auswerteeinheit, bzw. der Verarbeitungs- und Anzeigeeinheit gespeicherten Geschwindigkeitswerte nach Beendigung der sportlichen Aktivität über induktive Schnittstellen in einen Computer überspielt werden, um dort entsprechend weiterverarbeitet werden zu können.

Die erfindungsgemäße Vorrichtung ist für alle sportlichen oder sonstigen Tätigkeiten, bei denen sich ein Benutzer oder ein Objekt bewegt, anwendbar. Insbesondere sind hier alle Arten des Lauf- und Gehsports zu nennen, außerdem Ski-Langlauf, alpines Skifahren, Schlittschuhlaufen, Rollschuh- und Rollerbladefahren, Fahrradfahren, Bob- und Schlittenfahren, alle Arten des Pferdesports, Surfen, Segeln, Hundeschlittenfahren, usw. Bei einem Skifahrer kann z.B. der Mikrowellenstreifenleiter-Sensor und die Auswerteeinheit am Skischuh befestigt, oder in den Skischuh oder den Ski integriert werden. Beim Pferdesport kann der Sensor mitsamt Auswerteeinheit z.B. mit einem Gürtel um den Pferdeleib befestigt oder in den Pferdesattel integriert werden. Die separate Verarbeitungs- und Darstellungseinheit ist dann z.B. am Handgelenk des Reiters befestigt.

Die erfindungsgemäße Vorrichtung umfaßt weiterhin vorteilhafterweise

- Mittel zur Umwandlung der von dem Mikrowellenstreifenleitersensor (1) erzeugten analogen Meßsignale in digitale Signale,
- Mittel zur periodischen Abtastung der digitalen Signale,
- Mittel zur Umwandlung der periodisch abgetasteten Signalabschnitte in jeweils ein Frequenzspektrum A(f),
- Mittel zur Bestimmung einer Frequenzschranke F des jeweiligen aktuellen Frequenzspektrums A(f),
- Mittel zur Berechnung der aktuellen Geschwindigkeit bzw. der zurückgelegten Wegstrecke des sich bewegenden Benutzers oder Objektes aus der Frequenzschranke F des jeweiligen aktuellen Frequenzspektrums A(f).

Die Mittel zur Umwandlung der Signalabschnitte in jeweils ein Frequenzspektrum A(f) weisen vorzugsweise Mittel zu einer Multiplikation jeweils eines Signalabschnittes mit einem Hamming-Fenster und Mittel zu einer nachfolgenden Fourier-Transformation der multiplizierten Signalabschnitte auf.

Die Mittel zur Bestimmung der Frequenzschranke F des jeweiligen aktuellen Frequenzspektrums A(f) weisen vorzugsweise auf:

a) Mittel zum Festlegen eines Schwellenpegels S, wobei $S < A (f = 0)$,
b) Mittel zum Vergleich des Schwellenpegels S mit dem Frequenzspektrum A(f) von der Frequenz $f = 0$ in Richtung ansteigender Frequenzen bis zu einer festgelegten Grenzfrequenz $f_G$,
c) Mittel zum Festlegen eines ersten Frequenzwertes $f_1$ bei $A (f = f_1) = S$,
$d_1$) Mittel zum Festlegen von $f_1$ als die gesuchte Frequenzschranke F unter der Bedingung $A(f) < S$ für $f_1 < f \leq f_G$,
$d_2$) Mittel zum Festlegen eines zweiten Frequenzwertes $f_2$ bei $A(f = f_2) = S$ unter der Bedingung A(f) nicht kleiner S für $f_1 < f \leq f_G$,
e) Mittel zum Vergleich der Schwellenwertunterschreitung $d = f_2 - f_1$ mit festgelegten Werten y und z, wobei $y < z$:
$f_1$) Mittel zur Nichtbeachtung von $f_1$ und $f_2$ und Mittel zum weiteren Vergleich von A(f) und S entsprechend den Schritten c) ff bis zur Grenzfrequenz $f_G$

unter der Bedingung $d < y$,
$f_2$) Mittel zur Nichtbeachtung des aktuellen Frequenzspektrums A(f) unter der Bedingung $y < d \leq z$,
$f_3$) Mittel zum Festlegen von $f_1$ als die gesuchte Frequenzschranke F unter der Bedingung $d > z$,

Weiterhin können in der erfindungsgemäßen Vorrichtung Mittel für eine Plausibilitätskontrolle des aus dem jeweils aktuellen Frequenzspektrum A(f) berechneten Geschwindigkeitswertes vorgesehen sein, mit

- Mitteln zur Abschätzung der Beschleunigungsleistung des sich bewegenden Benutzers bzw. Objektes mittels der Beziehung:

$$P = m (v_2{}^2 - v_1{}^2)/2\, \Delta t$$

wobei m die Masse des sich bewegenden Benutzers oder Objektes, $v_1$ die aus dem jeweils vorgehenden Frequenzspektrum $A_1(f)$ berechnete Geschwindigkeit des sich bewegenden Benutzers oder Objektes, $v_2$ die aus dem aktuellen Frequenzspektrum $A_2(f)$ berechnete Geschwindigkeit des sich bewegenden Benutzers oder Objektes und $\Delta t$ die zwischen der Abtastung der beiden Frequenzspektren verstrichene Zeit ist,

- Mittel zum Vergleich der ermittelten Beschleunigungsleistung P mit einer festgelegten oberen und einer festgelegten unteren Beschleunigungsgrenze ($P_{max}$ bzw. $P_{min}$), mit

    Mitteln zur Nichtbeachtung des Geschwindigkeitswertes $v_2$ unter der
    Bedingung $P < P_{min}$ oder $P > P_{max}$, und
    Mitteln zur Festlegung von $v_2$ als aktueller Geschwindigkeitswert unter der Bedingung $P_{min} < P < P_{max}$.

Die vorliegende Erfindung umfaßt außerdem ein Verfahren zur Bestimmung der Geschwindigkeit bzw. der zurückgelegten Wegstrecke eines sich bewegenden Benutzers oder Objektes aus Meßsignalen, die von einem Mikrowellenstreifenleitersensor (1) einer der erfindungsgemäßen Vorrichtungen erzeugt werden, wobei das Verfahren folgende Schritte umfaßt:

- Umwandlung der von dem Mikrowellenstreifenleitersensor (1) erzeugten analogen Meßsignale in digitale Signale,
- periodische Abtastung der digitalen Signale,
- Umwandlung der periodisch abgetasteten Signalabschnitte in jeweils ein Frequenzspektrum A(f),
- Bestimmung einer Frequenzschranke F des jeweiligen aktuellen Frequenzspektrums A(f),
- Berechnung der aktuellen Geschwindigkeit bzw. der zurückgelegten Wegstrecke des sich bewegenden Benutzers oder Objektes aus der Frequenzschranke F des jeweiligen aktuellen Frequenzspektrums A(f).

Vorteilhafterweise wird beim erfindungsgemäßen Verfahren die Umwandlung der Signalabschnitte in jeweils ein Frequenzspektrum A(f) mittels einer Multiplikation jeweils eines Signalabschnittes mit einem Hamming-Fenster und einer nachfolgenden Fourier-Transformation der multiplizierten Signalabschnitte durchgeführt.

Die Bestimmung der Frequenzschranke F des jeweiligen aktuellen Frequenzspektrums A(f) kann mittels folgender Schritte durchgeführt werden:

a) Festlegen eines Schwellenpegels S, wobei S < A (f = 0),
b) Vergleich des Schwellenpegels S mit dem Frequenzspektrum A(f) von der Frequenz f= 0 in Richtung ansteigender Frequenzen bis zu einer festgelegten Grenzfrequenz $f_G$,
c) Festlegen eines ersten Frequenzwertes $f_1$ bei A (f = $f_1$) = S,
$d_1$) falls A(f) < S für $f_1$ < f ≤ $f_G$: Festlegen von $f_1$ als die gesuchte Frequenzschranke F, andernfalls
$d_2$) Festlegen eines zweiten Frequenzwertes $f_2$ bei A(f = $f_2$) = S, wobei f2 > f1,
e) Vergleich der Schwellenwertunterschreitung d = $f_2$ - $f_1$ mit festgelegten Werten y und z, wobei y < z:
$f_1$) falls d < y: Nichtbeachtung von $f_1$ und $f_2$, weiterer Vergleich von A(f) und S entsprechend den Schritten c) ff bis zur Grenzfrequenz $f_G$
$f_2$) falls y < d ≤ z: Nichtbeachtung des aktuellen Fre-quenzspektrums A(f),
$f_3$) falls d > z: Festlegen von $f_1$ als die gesuchte Fre-quenzschranke F.

Vorteilhafterwesie wird der aus dem jeweils aktuellen Frequenzspektrum A(f) berechnete Geschwindigkeitswert einer Plausibilitätskontrolle mittels der folgenden Schritte unterzogen:

- Abschätzung der Beschleunigungsleistung des sich bewegenden Benutzers bzw. Objektes mittels der Beziehung:

$$P = m \, (v_2^{\,2} - v_1^{\,2})/2 \, \Delta t$$

wobei m die Masse des sich bewegenden Benut-zers oder Objektes, $v_1$ die aus dem jeweils vorher-gehenden Frequenzspektrum $A_1$(f) berechnete Ge-schwindigkeit des sich bewegenden Benutzers oder Objektes, $v_2$ die aus dem aktuellen Frequenzspektrum A2(f)berechnete Geschwindigkeit des sich bewegenden Benutzers oder Objektes und $\Delta t$ die zwischen der Abtastung der beiden Frequenzspektren verstrichene Zeit ist,

- Vergleich der ermittelten Beschleunigungsleistung P mit einer festgelegten oberen und einer festge-legten unteren Beschleunigungsgrenze ($P_{max}$ bzw. $P_{min}$):

falls P < $P_{min}$ oder P > $P_{max}$: Nichtbeachtung des Geschwindigkeitswertes $v_2$
falls $P_{min}$ < P < $P_{max}$: Festlegung von $v_2$ als ak-tueller Geschwindigkeitswert.

Die vorliegende Erfindung wird im folgenden unter Bezug auf die beigefügten Zeichnungen näher erläutert. Es zeigen:

Fig. 1 das Funktionsprinzip eines Mikrowellen-Sensors,

Fig. 2 ein Blockschaltbild eines Mikrowellenstreifenleiter-Sensors und einer Auswerteeinheit gemäß der vorliegenden Erfindung,

Fig. 3 ein Blockschaltbild einer bevorzugten Aus-führungsform des Mikrowellenstreifenleiter-Sen-sors und der Auswerteeinheit gemäß der vorliegenden Erfindung,

Fig. 4 ein Blockschaltbild der separaten Verarbeitungs- und Anzeigeeinheit gemäß der vorliegenden Erfindung,

Fig. 5 eine mögliche Anwendung der vorliegenden Erfindung, und

die Fig. 6 bis 9 Beispiele von mit dem erfindungsgemäßen Verfahren erzeugten Frequenzspektren zur Bestimmung der Geschwindigkeit des Benutzers bzw. Objektes.

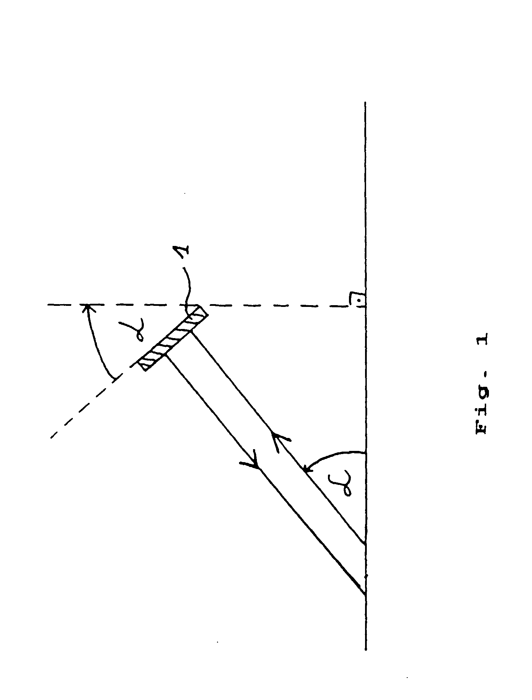

Fig. 1 zeigt einen Mikrowellen-Sender 1, der an einem sich bewegenden Benutzer oder Objekt befestigt ist und dessen Strahlachse um einen Winkel α zwischen 20 und 60° aus der Bodennormale gedreht ist. Der im Rahmen der vorliegenden Erfindung eingesetzte Mikrowellen-Sensor ist ein Mikrowellenstreifenleiter-Sensor 1, der Strahlen der Frequenz 5.8 GHz aussendet und eine Sende- und Empfangsantenne sowie einen Frequenzmischer umfaßt, der das Differenzfrequenzsignal zwischen ausgesendetem und empfangenem Mikrowellensignal in das Basisband heruntermischt.

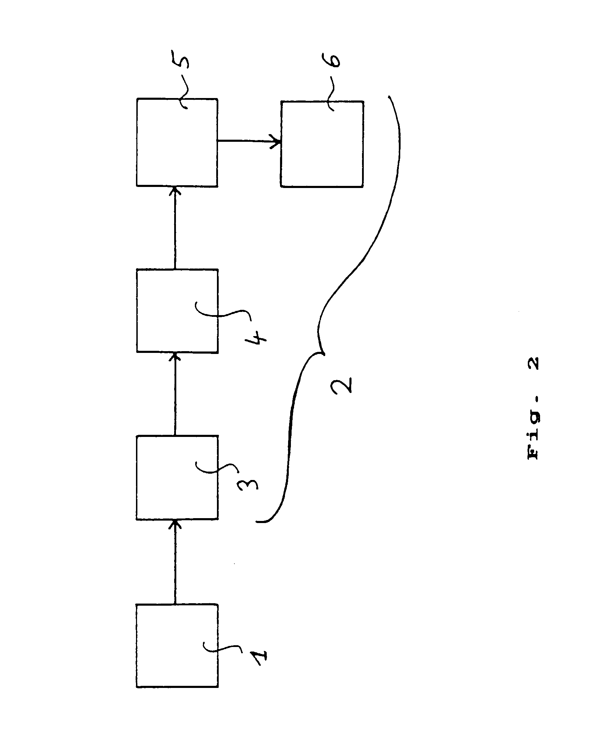

Fig. 2 zeigt ein Blockschaltbild eines Mikroweflenstreifenleiter-Sensors 1 und einer Auswerteeinheit 2 gemäß der vorliegenden Erfindung. Der Mikrowellenstreifenleiter-Sensor liefert ein Ausgangssignal, das über einen Vorverstärker 3 auf einen Analog-Digital-Wandler gelangt. Die digitalisierten Daten werden mittels eines Mikroprozessors mit RAM- und ROM-Speichern zwischengespeichert und bezüglich ihrer Geschwindigkeitsinformation und der zurückgelegten

Wegstrecke ausgewertet. Dann werden die Daten seriell an einen Sender 6 übertragen.

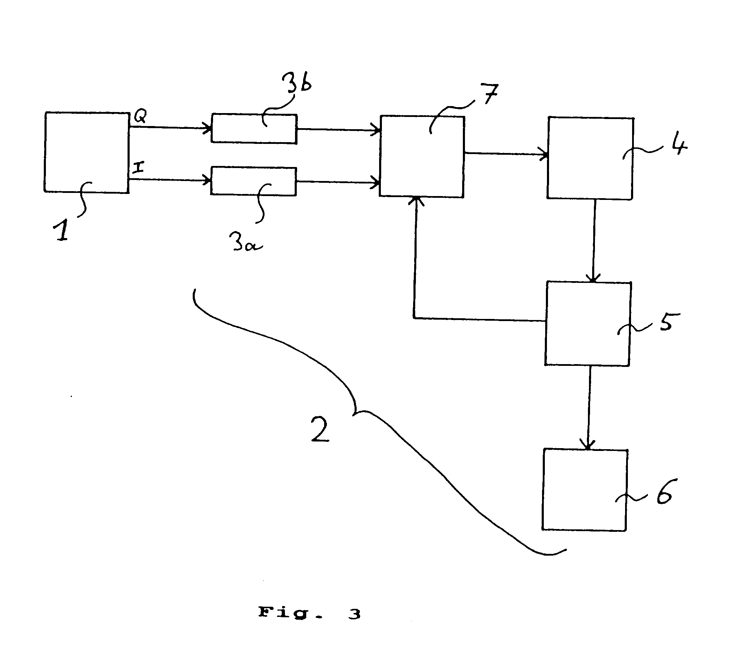

Fig. 3 zeigt eine bevorzugte Ausführungsform des Mikrowellenstreifenleiter-Sensors 1 und der Auswerteeinheit 2. Der Mikrowellenstreifenleiter-Sensor 1 liefert an den beiden Ausgängen I und Q ein komplexes Ausgangssigal, das über entsprechende Vorverstärker 3a und 3b auf einen Multiplexer 7 gelangt. Ein Mikroprozessor 5 mit RAM- und ROM-Speichern schaltet abwechselnd I und Q auf den Sample & Hold-Eingang des Analog-Digital-Wandlers 4. Die digitalisierten Daten werden im RAM-Speicher zwischengespeichert. Mit Hilfe der im ROM gespeicherten Softwareprogramme werden die zwischengespeicherten Daten bezüglich ihrer Geschwindigkeitsinformation ausgewertet, vorzugsweise mittels einer Fourier-Transformation. Der zur Geschwindigkeit des Sportlers gehörende Frequenzwert im Frequenzspektrum wird herausgefiltert und aus der Frequenzinformation wird dann die Geschwindigkeit berechnet. Eine weiteres einfaches Verfahren zur Ermittlung der Geschwindigkeit ist die Nulldurchgangszählung. Die Software enthält außerdem Filteralgorithmen zur Fehlerunterdrückung etc. Zusätzlich werden der ab Startzeitpunkt zurückgelegte Weg und die Durchschnittsgeschwindigkeit errechnet. Durch eine Auswertung des Frequenzspektrums mit der Autokorrelationsfunktion ist es möglich, die Schrittfrequenz des Benutzers zu bestimmen. Die ausgewerteten Daten werden dann seriell an einen Sender 6 übertragen. Die Spannungsversorgung des Mikrowellenstreifenleiter-Sensors und der Auswerteeinheit erfolgt über Akkus bzw. über Batterien. Bei einer Verorgungsspannung von etwa 5 V ergibt sich eine Sendeleistung von ca. 1 mW. Zwei Schaltnetzteile, z.B. mit 3,3 Volt bzw. 5,0 Volt, stabilisieren die Spannung und werden über den Shut-Down-Eingang der Auswerteeinheit auf Standby geschaltet.

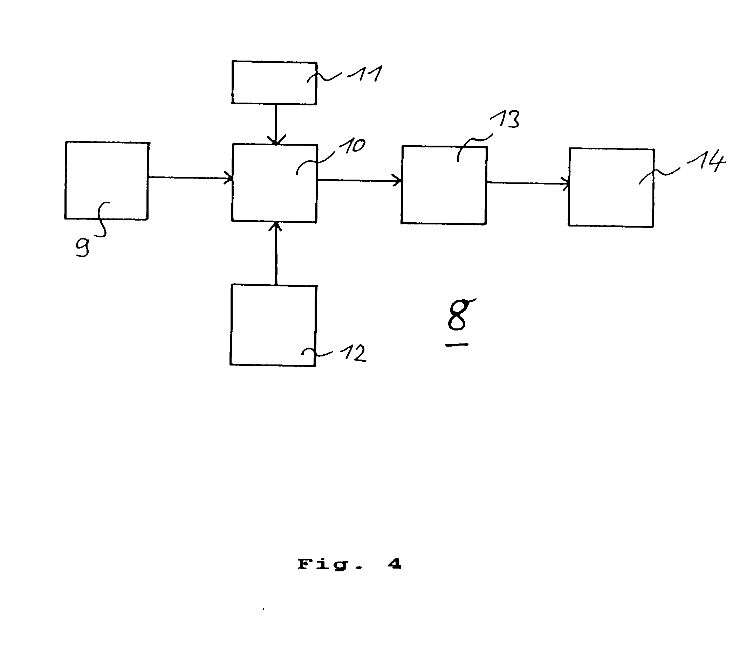

Fig. 4 zeigt ein Blockschaltbild einer separaten Verarbeitungs- und Anzeigeeinheit 8 gemäß der vorliegenden Erfindung. Eine Empfangseinheit 9 empfängt die vom Sender 6 der Auswerteeinheit 2 ausgesendeten Daten und leitet sie über eine serielle Schnittstelle zum Mikroprozessor 10 mit RAM- und ROM-Speichern weiter. Im RAM-Speicher werden die Daten zwischengespeichert. Über eine Tastatur bzw. über Bedienknöpfe 11 wird mitgeteilt, welche Daten an den Displaytreiber 13 geschickt und in der Anzeige 14 dargestellt werden sollen. Diese Anzeige kann z.B. eine LCD-Anzeige sein. Zusatzfunktionen, wie z.B. Uhrenfunktionen, wenn die Verarbeitungs- und Anzeigeeinheit mit einem Armband am Benutzer befestigt ist, werden durch ein spezielles Softwareprogramm im ROM-Speicher gespeichert.

In einer anderen Ausführungsform ist die separate Verarbeitungs- und Anzeigeeinheit 8 stationär ausgebildet. Sie kann dabei z.B. an einen Computer angeschlossen sein, durch den die empfangenen Daten nach beliebigen Kriterien verarbeitet, gespeichert und dargestellt werden.

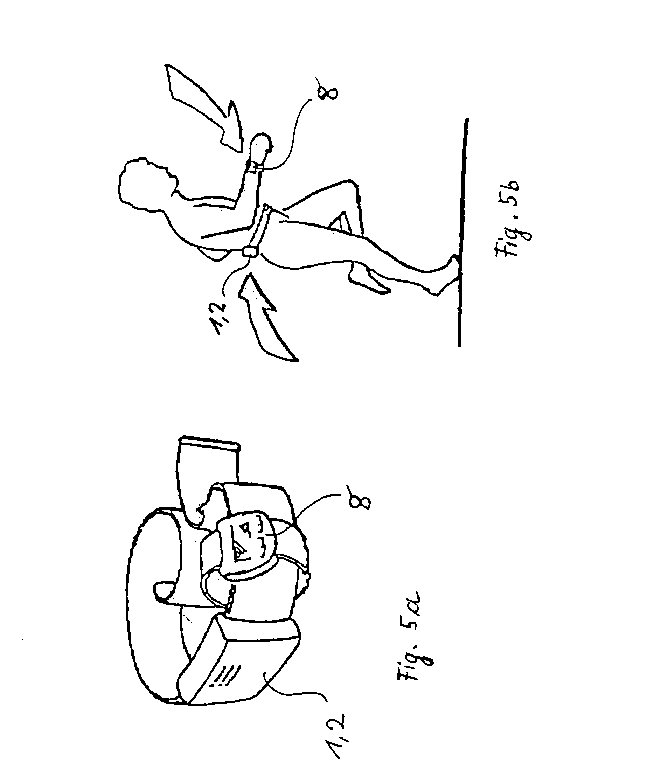

Fig. 5 zeigt eine mögliche Anwendung der erfindungsgemäßen Vorrichtung für einen Läufer. Der Mikrowellenstreifenleiter-Sensor 1 und die Auswerteeinheit 2 sind durch einen elastischen Gürtel, der z.B. aus Kunststoff besteht, an der Hüfte des Läufers befestigt. Der Sensor ist dabei um einen festen Winkel gegen die Bodennormale gedreht, z.B. um 30°. Da der Gürtel aus elastischem Material besteht, schmiegt er sich dem Körper an, wodurch verhindert wird, daß der Mikrowellenstreifenleiter-Sensor während des Laufens oder Gehens verrutscht, wackelt, oder seine Position auf eine andere Art und Weise verändert. Die separate Verarbeitungs- und Anzeigeeinheit 8 ist durch ein Armband oder dgl. am Handgelenk des Läufers oder Gehers befestigt. Dadurch ist es für den sich bewegenden Benutzer möglich, während der Bewegung seine eigene Geschwindigkeit und die bereits zurückgelegte Wegstrecke zu überprüfen. Durch die geringe Größe und das geringe Gewicht der erfindungsgemäßen Vorrichtung wird dabei die Bewegung weder behindert noch gestört.

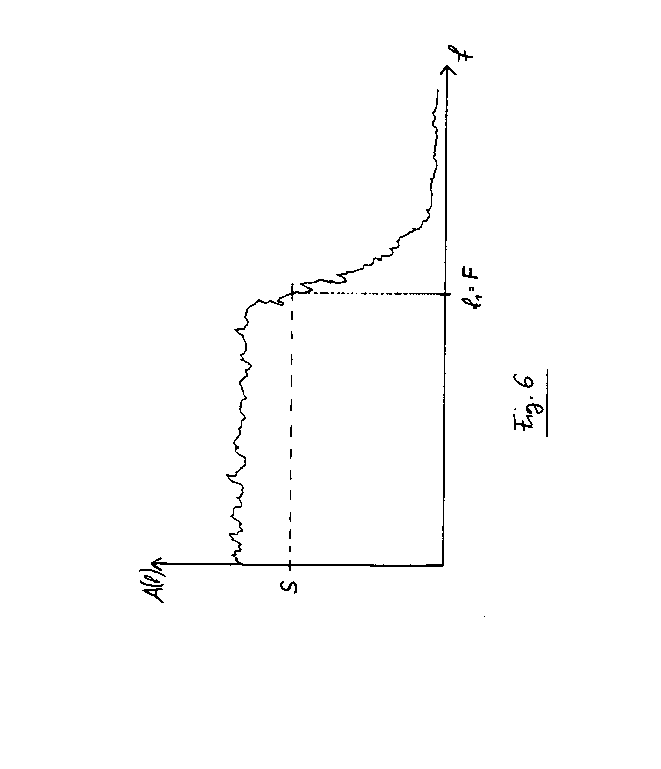

Im folgenden wird unter Bezug auf die Figuren 6 bis 9 das erfindungsgemäße Verfahren zur Bestimmung der Geschwindigkeit bzw. der Wegstrecke eines sich bewegenden Benutzers oder Objektes aus Meßsignalen, die von einem Mikrowellenstreifenleitersensor 1 der oben beschriebenen Vorrichtung erzeugt werden, näher erläutert.

Der Mikrowellenstreifenleitersensor 1 liefert ein komplexes Zeitsignal (Real- und Imaginärteil). Dessen spektrale Zusammensetzung ist abhängig von der Geschwindigkeit des Benutzers bzw. des Objektes und der Beschaffenheit des Untergrundes. Um durch die Bewegung eventuell hervorgerufene Störungen zu unterdücken, wird das Signal vorzugsweise zuerst mit einem Rumpel-Filter hochpaßgefiltert, und danach mit einem Anti-Aliasing- Filter tiefpaßgefiltert.

Das analoge Sensorsignal wird daraufhin im Analog-Digital-Wandler 4 mit einer festen Abtastrate analog-digital gewandelt. Aus dem kontinuierlichen digitalen Signal werden dann periodisch kurze Abschnitte im Mikroprozessor 5 der Auswerteeinheit 2 einer spektralen Untersuchung unterzogen. Hierzu werden die Signalabschnitte mit einem Hamming-Fenster bzw. einer Hamming-Funktion multipliziert und danach fouriertransformiert. Das Hamming-Fenster bzw. die Hamming-Funktion dient dazu, den Anfang und das Ende des nicht kontinuierlichen Spektrums abzuschwächen und einander anzugleichen, da bei der Fouriertransformation davon ausgegangen wird, daß das zu transformierende Spektrum kontinuierlich ist. Im vorliegenden Fall jedoch ist das Spektrum nicht kontinuierlich, sondern besteht jeweils aus einem kurzen Abschnitt, der aus dem kontinuierlichen Spektrum periodisch abgetastet wird, und dessen Anfang und Ende verschieden sind. Eine Fouriertransformation ohne vorherige Multiplikation mit einem Hamming-Fenster würde deshalb einen großen Sprung im Spektrum erzeugen.

Die Fig. 6 zeigt ein typisches Spektrum nach der Multiplikation mit einem Hamming-Fenster und nachfolgender Fouriertransformation. Das Spektrum A(f) fällt mit zunehmender Frequenz f ab. Ab einer bestimmten Frequenz ist nur noch ein durch den Vorverstärker und die Quantisierung verursachtes Rauschen vorhanden. Diese Frequenzschranke F ist als Maß und zur Berechnung des Geschwindigkeitswertes geeignet. Um die Frequenzschranke F zu bestimmen, wird ein Schwellenpegel S definiert. Das Betragsspektrum wird von Null Hertz an zu steigenden Frequenzen bis zu einer Grenzfrequenz untersucht. Die Grenzfrequenz wird dabei typischerweise bei der oder durch die Fouriertransformation festgelegt. Fällt das Spektrum A(f) unter den Schwellenpegel S und bleibt das Spektrum A(f) < S für $f1 < f \leq f_G$, , so ist bei diesen Punkt $A(f_1)=S$ die Frequenzschranke $F=f_1$ erreicht. F wird als Frequenzschranke festgelegt und zur Berechnung der Geschwindigkeit bzw. der Wegstrecke verwendet. Dieser Fall ist in Fig. 6 dargestellt.

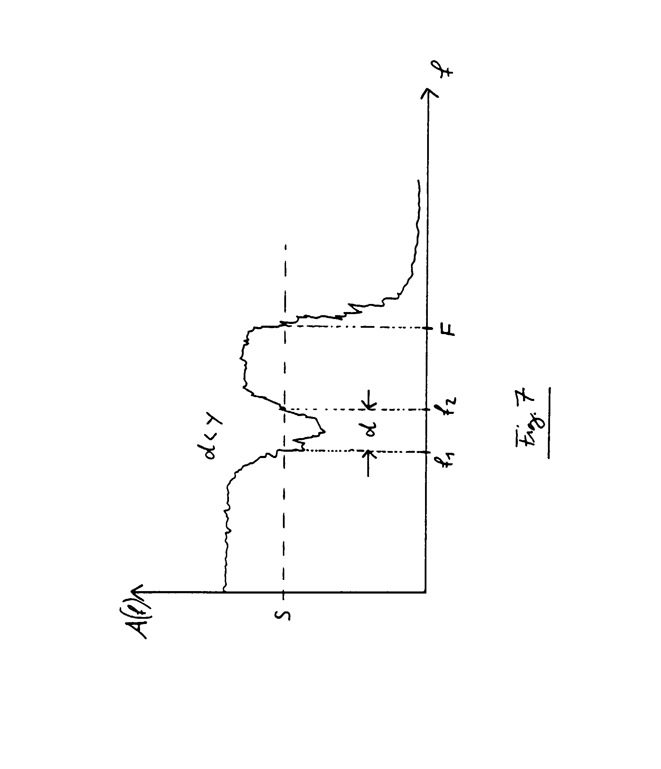

Um Fehlmessungen durch zufällige schmale Minima, die den Schwellenpegel S unterschreiten, zu vermeiden, wird untersucht, ob das Spektrum A(f) bei höheren Frequenzen den Schwellenpegel S wieder überschreitet. Ist dies der Fall, so wird diese Frequenz $f_2$, bei der $A(f_2)=S$, als zweiter Frequenzwert festgelegt, wie in Fig. 7 dargestellt. Danach wird die Schwellenpegelunterschreitung $d=f_2-f_1$ bestimmt. Diese Schwellenpegelunterschreitung d wird mit festgelegten Maßen y und z verglichen, wobei y <z. Für den Fall d < y werden f1 und f2 verworfen bzw. nichtbeachtet, und das Spektrum wird weiter entsprechend den obenbeschriebenen Schritten bis hinauf zur Grenzfrequenz auf die wirkliche Frequenzschranke F untersucht. Dieser Fall ist in der Fig. 7 dargestellt.

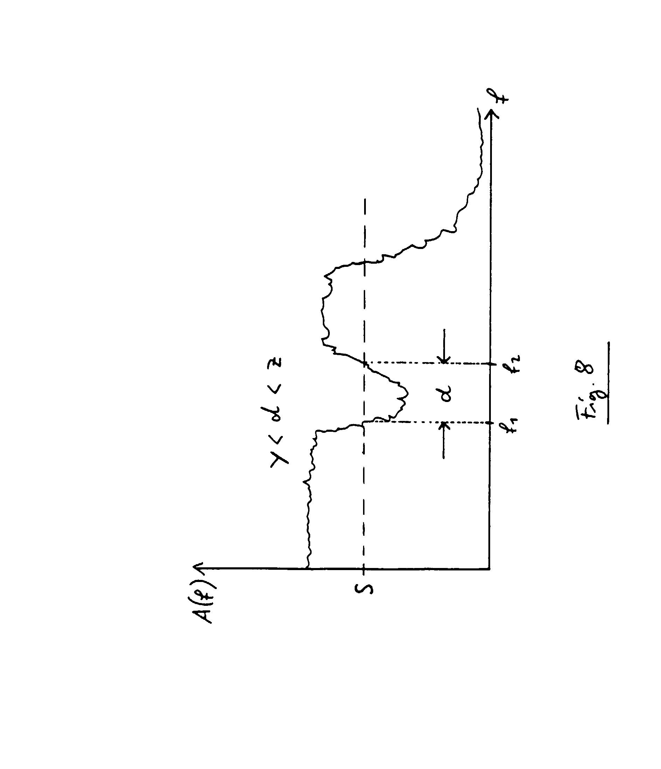

Liegt die Schwellenwertunterschreitung d zwischen den Maßen y und z, d.h. y <d <z, wie in Fig. 8 dargestellt, so wird keine Frequenzschranke bestimmt, sondern das gesamte Spektrum wird verworfen bzw. nichtbeachtet und es wird das nächste Spektrum untersucht, Die Frequenzschranke kann dann aus dem vorangehenden und dem nachfolgenden Spektrum bestimmt werden.

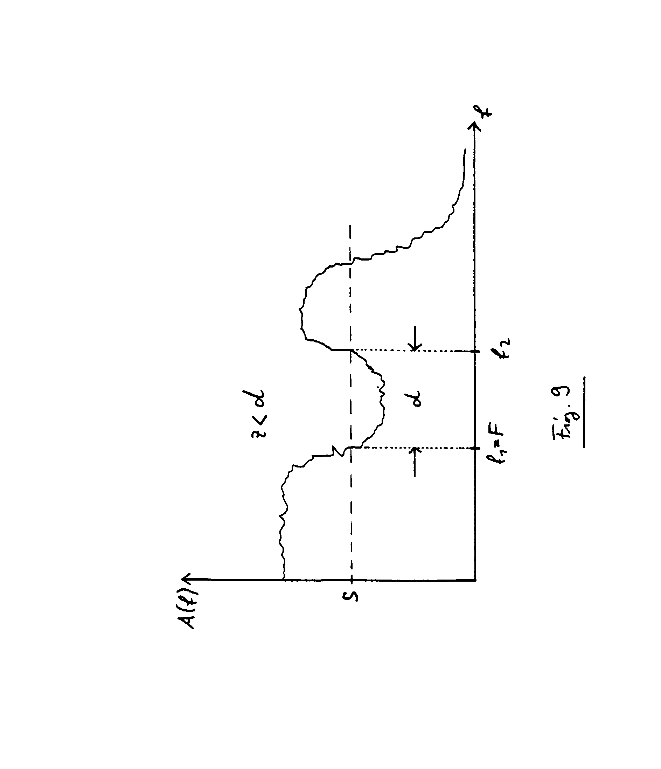

In Fig. 9 ist der Fall dargestellt, daß die Schwellenwertunterschreitung d größer ist als das Maß z, d.h. d> z. In diesem Fall wird $f_1$ als Frequenzschranke F festgelegt.

Ist die Frequenzschranke gemäß dem obigen Verfahren bestimmt, so wird die Geschwindigkeit v des Benutzers bzw. Objektes durch Multiplikation der Frequenzschranke F mit einem vorher ermittelten Eichfaktor bestimmt. Der Geschwindigkeitswert wird daraufhin an den Sender 6 übergeben, der ihn der Verarbeitungs- und Anzeigeeinheit 8 übertägt. Aus den Geschwindigkeitswerten und dem Meßintervall lassen sich Teilstrecken berechen, die fortlaufend zur bisher zurückgelegten Wegstrecke aufaddiert werden.

Die Berechnung des Geschwindigkeitswertes und/oder der zurückgelegten Wegstrecke könnte aber auch erst in der Verarbeitungs- und Anzeigeeinheit 9 durchgeführt weren.

Die Zuverlässigkeit des Verfahrens und der ermittelten Geschwindigkeitswerte wird weiter erhöht, indem die Geschwindigkeitswerte einer Plausibilitätskontrolle unterzogen werden. Hierdurch kann der störende Einfluß von bewegten Hindernissen, die sich im Empfangsbereich des Sensors befinden, reduziert werden. Dazu wird mit Hilfe der Beziehung $E = mv^2/2$ die kinetische Energie E des Benutzers oder Objektes grob agbeschätzt. Die Abschätzung ist deshalb grob, da die Masse m des Benutzers bzw. Objektes nicht exakt bekannt ist. Aus der kinetischen Energie $E_1$ bei der vorangegangenen Geschwindigkeitsmessung, der kinetischen Energie $E_2$ bei der aktuellen Geschwindigkeitsmessung und der dazwischen verstrichenen Zeit $\Delta t$ läßt sich die aufgebrachte Beschleunigungsleistung $P = (E_2-E_1)/\Delta t$ abschätzen. Negative Beschleunigungsleistungen können als Verzögerungsleistungen gedeutet werden. Überschreitet die ermittelte Beschleunigungsleistung eine anzunehmende maximale Beschleunigungsleistung $P_{max}$, oder unterschreitet sie eine anzunehmende minimale Beschleunigungsleistung $P_{min}$, d.h. $P < P_{min}$ oder $P > P_{max}$, so wird der aktuelle Geschwindigkeitswert als unplausibel verworfen bzw. nichtbeachtet.

**Patentansprüche**

1. Vorrichtung zum Messen der Geschwindigkeit und der zurückgelegten Wegstrecke eines sich bewegenden Benutzers oder Objektes mit einem Dopplerradar-Sensor, der an einem sich bewegenden Benutzer oder Objekt befestigbar ist, Meßsignale erzeugt und einer Auswerteeinheit (2) zuführt, die einen Sender umfaßt, der die ausgewerteten Daten einer separaten Verarbeitungs- und Anzeigeeinheit (8) überträgt, **dadurch gekennzeichnet**, daß der Dopplerradar-Sensor durch einen Mikrowellenstreifenleitersensor (1) gebildet ist und daß Mittel zur Umwandlung der von dem Mikrowellenstreifenleitersensor (1) erzeugten analogen Meßsignale in digitale Signale, Mittel zur periodischen Abtastung der digitalen Signale, Mittel zur Umwandlung der periodisch abgetasteten Signalabschnitte in jeweils ein Frequenzspektrum A(f), Mittel zur Bestimmung einer Frequenzschranke F des jeweiligen aktuellen Frequenzspektrums A(f) und Mittel zur Berechnung der aktuellen Geschwindigkeit bzw. der zurückgelegten Wegstrecke des sich bewegenden Benutzers oder Objektes aus der Frequenzschranke F des jeweiligen aktuellen Frequenzspektrums A(f) vorgesehen sind.

2. Vorrichtung gemäß Anspruch 1, **dadurch gekennzeichnet**, daß der Mikrowellenstreifenleitersensor (1) und die Auswerteeinheit (2) klein und tragbar ausgebildet sind.

3. Vorrichtung gemäß Anspruch 1 oder 2, **dadurch gekennzeichnet**, daß die separate Verarbeitungs- und Anzeigeeinheit (8) klein und tragbar ausgebildet ist.

4. Vorrichtung gemäß Anspruch 3, **dadurch gekennzeichnet**, daß die separate Verarbeitungs- und Anzeigeeinheit (8) durch ein Armband oder dergleichen an dem sich bewegenden Benutzer befestigbar ist.

5. Vorrichtung gemäß Anspruch 1 oder 2, **dadurch gekennzeichnet**, daß die Verarbeitungs- und Anzeigeeinheit (8) stationar ausgebildet ist.

6. Vorrichtung gemäß einem der Ansprüche 1 bis 5, **dadurch gekennzeichnet**, daß der Mikrowellenstreifenleitersensor (1) und die Auswerteeinheit (2) in einem Gehäuse angeordnet sind, das an dem sich bewegenden Benutzer bzw. an dem sich bewegenden Objekt durch einen elastischen Gürtel, eine Schnalle, einen am Gehäuse angebrachten Clip oder dergleichen befestigbar ist.

7. Vorrichtung gemäß Anspruch 6, **dadurch gekennzeichnet**, daß der Mikrowellenstreifenleitersensor (1) derart in dem Gehäuse angeordnet ist, daß die von ihm ausgesendete Strahlung schräg auf den Boden auftrifft, wenn das Gehäuse am Benutzer oder am Objekt befestigt ist.

8. Vorrichtung gemäß einem der vorhergehenden Ansprüche, **dadurch gekennzeichnet**, daß die Auswerteeinheit(2) zumindest einen Vorverstärker(3), einen A/D-Wandler(4), einen Mikroprozessor (5) mit RAM- und ROM-Speichern und einen Sender (6) umfaßt.

9. Vorrichtung gemäß einem der vorhergehenden Ansprüche, **dadurch gekennzeichnet**, daß die Auswerteeinheit (2) einen Multiplexer (7) umfaßt.

10. Vorrichtung gemäß einem der vorhergehenden Ansprüche, **dadurch gekennzeichnet**, daß die Verarbeitungs- und Anzeigeeinheit (8) eine Empfangseinheit (9), sowie einen Mikroprozessor (10) mit RAM- und ROM-Speichern und einer Anzeigeeinheit (14) umfaßt.

11. Vorrichtung gemäß einem der vorhergehenden Ansprüche, **dadurch gekennzeichnet**, daß der Mikrowellenstreifenleitersensor (1) eine Sendefrequenz von 5.8 GHz aufweist.

12. Vorrichtung gemäß einem der vorhergehenden Ansprüche, **dadurch gekennzeichnet**, daß der Mikrowellenstreifenleitersensor (1) und die Auswerteeinheit (2) mit einem Beschleunigungssensor zum Abschalten des Mikrowellenstreifenleitersensors bei konstanter Geschwindigkeit kombiniert sind.

13. Vorrichtung gemäß einem der vorhergehenden Ansprüche, **dadurch gekennzeichnet**, daß der Mikrowellenstreifenleitersensor (1) und die Auswerteeinheit (2) mit einem Drucksensor zur Kompensation von durch Höhenunterschiede entstehenden Meßfehlern kombiniert sind.

14. Vorrichtung gemäß einem der vorhergehenden Ansprüche, **dadurch gekennzeichnet**, daß die Mittel zur Umwandlung der Signalabschnitte in jeweils ein Frequenzspektrum $A(f)$ Mittel zu einer Multiplikation jeweils eines Signalabschnittes mit einem Hamming-Fenster und Mittel zu einer nachfolgenden Fourier-Transformation der multiplizierten Signalabschnitte aufweisen.

15. Vorrichtung gemäß einem der vorhergehenden Ansprüche, **dadurch gekennzeichnet**, daß die Mittel zur Bestimmung der Frequenzschranke F des jeweiligen aktuellen Frequenzspektrums $A(f)$ aufweisen:

a) Mittel zum Festlegen eines Schwellenpegels S, wobei $S < A$ ($f=0$),
b) Mittel zum Vergleich des Schwellenpegels S mit dem Frequenzspektrum $A(f)$ von der Frequenz $f = 0$ in Richtung ansteigender Frequenzen bis zu einer festgelegten Grenzfrequenz $f_G$,
c) Mittel zum Festlegen eines ersten Frequenzwertes $f_1$ bei $A$ ($f = f_1$) = S,
$d_1$) Mittel zum Festlegen von $f_1$ als die gesuchte Frequenzschranke F unter der Bedingung $A(f) < S$ für $f_1 < f \leq f_G$,
$d_2$) Mittel zum Festlegen eines zweiten Frequenzwertes $f_2$ bei $A(f = f_2)$ = S unter der Bedingung $A(f)$ nicht kleiner S für $f_1 < f \leq f_G$,
e) Mittel zum Vergleich der Schwellenwertunterschreitung $d = f_2 - f_1$ mit festgelegten Werten y und z, wobei $y < z$:
$f_1$) Mittel zur Nichtbeachtung von $f_1$ und $f_2$ und Mittel zum weiteren Vergleich von $A(f)$ und S entsprechend den Schritten c)ff bis zur Grenzfrequenz $f_G$ unter der Bedingung $d < y$,
$f_2$) Mittel zur Nichtbeachtung des aktuellen Frequenzspektrums $A(f)$ unter der Bedingung $y < d \leq z$,
$f_3$) Mittel zum Festlegen von $f_1$ als die gesuchte Frequenzschranke F unter der Bedingung $d > z$.

16. Vorrichtung gemäß einem der vorhergehenden Ansprüche, **dadurch gekennzeichnet**, daß Mittel für eine Plausibilitätskontrolle des aus dem jeweils aktuellen Frequenzspektrum A(f) berechneten Geschwindigkeitswertes vorgesehen sind, mit

- Mitteln zur Abschätzung der Beschleunigungsleistung des sich bewegenden Benutzers bzw. Objektes mittels der Beziehung:

$$P = m \, (v_2^2 - v_1^2)/2 \, \Delta t$$

wobei m die Masse des sich bewegenden Benutzers oder Objektes, $v_1$ die aus dem jeweils vorgehenden Frequenzspektrum $A_1(f)$ berechnete Geschwindigkeit des sich bewegenden Benutzers oder Objektes, $v_2$ die aus dem aktuellen Frequenzspektrum $A_2(f)$ berechnete Geschwindigkeit des sich bewegenden Benutzers oder Objektes und $\Delta t$ die zwischen der Abtastung der beiden Frequenzspektren verstrichene Zeit ist,

- Mittel zum Vergleich der ermittelten Beschleunigungsleistung P mit einer festgelegten oberen und einer festgelegten unteren Beschleunigungsgrenze ($P_{max}$ bzw. $P_{min}$), mit

    Mitteln zur Nichtbeachtung des Geschwindigkeitswertes $v_2$ unter der Bedingung $P < P_{min}$ oder $P > P_{max}$, und
    Mitteln zur Festlegung von $v_2$ als aktueller Geschwindigkeitswert unter der Bedingung $P_{min} < P < P_{max}$.

17. Verfahren zur Bestimmung der Geschwindigkeit bzw. der zurückgelegten Wegstrecke eines sich bewegenden Benutzers oder Objektes aus Meßsignalen, die von einem Mikrowellenstreifenleitersensor (1) einer Vorrichtung gemäß einem der Ansprüche 1 bis 16 erzeugt werden, mit folgenden Schritten:

- Umwandlung der von dem Mikrowellenstreifenleitersensor (1) erzeugten analogen Meßsignale in digitale Signale,

- periodische Abtastung der digitalen Signale,

- Umwandlung der periodisch abgetasteten Signalabschnitte in jeweils ein Frequenzspektrum A(f),

- Bestimmung einer Frequenzschranke F des jeweiligen aktuellen Frequenzspektrums A(f),

- Berechnung der aktuellen Geschwindigkeit bzw. der zurückgelegten Wegstrecke des sich bewegenden Benutzers oder Objektes aus der Frequenzschranke F des jeweiligen aktuellen Frequenzspektrums A(f).

18. Verfahren gemäß Anspruch 17, bei dem die Umwandlung der Signalabschnitte in jeweils ein Frequenzspektrum A(f) mittels einer Multiplikation jeweils eines Signalabschnittes mit einem Hamming-Fenster und einer nachfolgenden Fourier-Transformation der multiplizierten Signalabschnitte durchgefuhrt wird.

19. Verfahren gemäß Anspruch 17 oder 18, bei dem die Bestimmung der Frequenzschranke F des jeweiligen aktuellen Frequenzspektrums A(f) mittels folgender Schritte durchgeführt wird:

    a) Festlegen eines Schwellenpegels S, wobei $S < A \, (f = 0)$,

    b) Vergleich des Schwellenpegels S mit dem Frequenzspektrum A(f) von der Frequenz $f = 0$ in Richtung ansteigender Frequenzen bis zu einer festgelegten Grenzfrequenz $f_G$,

    c) Festlegen eines ersten Frequenzwertes $f_1$ bei $A \, (f = f_1) = S$,

    $d_1$) falls $A(f) < S$ für $f_1 < f \le f_G$: Festlegen von $f_1$ als die gesuchte Frequenzschranke F, anderenfalls

    $d_2$) Festlegen eines zweiten Frequenzwertes $f_2$ bei $A \, (f = f_2) = S$, wobei $f_2 > f_1$,

    e) Vergleich der Schwellenwertunterschreitung $d = f_2 - f_1$ mit festgelegten Werten y und z, wobei $y < z$:

    $f_1$) falls $d < y$: Nichtbeachtung von $f_1$ und $f_2$, weiterer Vergleich von A(f) und S entsprechend den Schritten c)ff bis zur Grenzfrequenz $f_G$,

    $f_2$) falls $y < d \le z$: Nichtbeachtung des aktuellen Frequenzspektrums A(f),

    $f_3$) falls $d > z$: Festlegen von $f_1$ als die gesuchte Frequenzschranke F.

20. Verfahren gemäß einem der Ansprüche 17 bis 19, bei dem der aus dem jeweils aktuellen Frequenzspektrum A(f) berechnete Geschwindigkeitswert einer Plausibilitätskontrolle mittels der folgenden Schritte unterzogen wird:

- Abschätzung der Beschleunigungsleistung des sich bewegenden Benutzers bzw. Objektes mittels der Beziehung:

$$P = m \, (v_2^2 - v_1^2)/2 \, \Delta t,$$

wobei m die Masse des sich bewegenden Benutzers oder Objektes, $v_1$ die aus dem jeweils vorgehenden Frequenzspektrum $A_1(f)$ berechnete Geschwindigkeit des sich bewegenden Benutzers oder Objektes, $v_2$ die aus dem aktuellen Frequenzspektrum $A_2(f)$ berechnete Geschwindigkeit des sich bewegenden Benutzers oder Objektes und $\Delta t$ die zwischen der Abtastung der beiden Frequenzspektren verstrichene Zeit ist,

- Vergleich der ermittelten Beschleunigungsleistung P mit einer festgelegten oberen und einer festgelegten unteren Beschleunigungsgrenze ($P_{max}$ bzw. $P_{min}$):

  falls $P < P_{min}$ oder $P > P_{max}$: Nichtbeachtung des Geschwindigkeitswertes $v_2$
  falls $P_{min} < P < P_{max}$: Festlegung von $v_2$ als aktueller Geschwindigkeitswert.

## Claims

1. A unit for measuring speed and traveled distance of a moving user or object with a Doppler Radar Sensor that is attachable to the moving user or object, produces measuring signals and transmits them to an Evaluation Unit (2) comprising a transmitter, which in turn transmits the evaluated data to a separate Processing and Display Unit (8), **characterized in**

   that the Doppler Radar Sensor is formed by a Microwave Strip Transmission Line Sensor (1) and
   that means for converting the analog measuring signals produced by the Microwave Strip Transmission Line Sensor (1) into digital signals, means for periodically scanning the digital signals, means for converting the periodically scanned signal portions into a respective Frequency Spectrum A(f), means for determining a Barrier Frequency F of the respective current Frequency Spectrum A(f), and means for calculating the current speed or traveled distance of the moving user or object from the Frequency Barrier F of the respective current Frequency Spectrum A(F) are provided.

2. Unit according to Claim 1,
   **characterized in**
   that the Microwave Strip Transmission Line Sensor (1) and the Evaluation Unit (2) are built small and portable.

3. Unit according to Claim 1 or 2,
   **characterized in**

that the separate Processing and Display Unit (8) is built small and portable.

4. Unit according to Claim 3,
   **characterized in**
   that the separate Processing and Display Unit (8) is attachable to the moving user with a wrist band or the like.

5. Unit according to Claim 1 or 2,
   **characterized in**
   that the Processing and Display Unit is stationary.

6. Unit according to any one of the Claims 1 to 5,
   **characterized in**
   that the Microwave Strip Transmission Line Sensor (1) and the Evaluation Unit (2) are located in a casing which is attachable to the moving user or object with an elastic belt, buckle, clip attached to the casing or the like.

7. Unit according to Claim 6,
   **characterized in**
   that the Microwave Strip Transmission Line Sensor (1) is located in the casing, so that the emitted radiation hits the ground at an angle when the casing is attached to the user or object.

8. Unit according to any one of the preceding claims,
   **characterized in**
   that the Evaluation Unit (2) includes at least one preamplifier (3), an A/D converter (4), a microprocessor (5) with RAM and ROM memories, and a transmitter (6).

9. Unit according to any one of the preceding claims,
   **characterized in**
   that the Evaluation Unit (2) includes a Multiplexer (7).

10. Unit according to any one of the preceding claims,
    **characterized in**
    that the Processing and Display Unit (8) includes a receiving unit (9) as well as a microprocessor (10) with RAM and ROM memories, and an evaluation unit (14).

11. Unit according to any one of the preceding claims,
    **characterized in**
    that the Microwave Strip Transmission Line Sensor (1) has a transmitter frequency of 5.8 GHz.

12. Unit according to any one of the preceding claims,
    **characterized in**
    that the Microwave Strip Transmission Line Sensor (1) and the Evaluation Unit (2) are combined with an Acceleration Sensor to turn off the Microwave Strip Transmission Line Sensor when the speed is constant.

13. Unit according to any one of the preceding claims, **characterized in** that the Microwave Strip Transmission Line Sensor (1) and the Evaluation Unit (2) are combined with a pressure sensor to compensate for measurement mistakes due to differences in altitude.

14. Unit according to any one of the preceding claims, **characterized in that** the means for converting each of the signal portions into a Frequency Spectrum A(f) comprises means for multiplying the respective signal portions with a Hamming Window and means for a subsequent Fourier Transformation of the multiplied signal portions.

15. Unit according to any one of the preceding claims, **characterized in** that the means for determining the Frequency Barrier F of the respective current Frequency Spectrum A(f) comprises:

a) means for determining a Threshold Indicator S, whereby $S < A(f=0)$

b) means for comparing the Threshold Indicator S, with a Frequency Spectrum A(f) from the frequency $f=0$ in the direction of increasing frequencies up to a predetermined barrier frequency $f_G$,

c) means for determining a first frequency value $f_1$ at $A(f=f_1)=S$,

$d_1$) means for determining $f_1$ as the required frequency barrier F on the condition $A(f) < S$ for $f_1 < f \leq f_G$,

$d_2$) means for determining a second frequency value $f_2$ at $A(f=f_2)=S$ on the condition A(f) not smaller than S for $f_1 < f \leq f_G$,

e) means for comparing the Threshold Value shortage $d=f_2-f_1$ with fixed values y and z, whereby $y < z$,

$f_1$) means for ignoring $f_1$ and $f_2$, and means for further comparing A(f) and S according to the steps c) et seqq. up to the barrier frequency $f_G$, on the condition $d < y$.

$f_2$) means for ignoring the current Frequency Spectrum A(f) on the condition $y < d \leq z$,

$f_3$) means for determining $f_1$ as the required frequency barrier F on the condition $d > z$.

16. Unit according to any of the preceding claims, **characterized in** that the means for a Plausibility Control of the speed values calculated from the respective current Frequency Spectrum A(f) are provided comprising:

- means for estimating the acceleration performance of the moving user or object by means of the relation:

$$P = m(v^2_2 - v^2_1)/2\,\Delta t$$

where m is the mass of the moving user or object, $v_1$ is the speed of the moving user or object calculated from the respective preceding Frequency Spectrum $A_1(f)$, $v_2$ is speed of the moving user or object calculated from the current Frequency Spectrum $A_2(f)$, and $\Delta t$ is the used up time between the scanning of both Frequency Spectrums,

- means for comparing the determined acceleration performance P with a fixed upper and lower acceleration border ($P_{max}$ or $P_{min}$) including:

means for ignoring the speed value $v_2$ on the condition $P<P_{min}$ or $P>P_{max}$, and means for determining $v_2$ as the current speed value on the condition $P_{min} < P < P_{max}$.

17. Process for determining the speed or traveled distance of a moving user or object from measurement signals produced by a Microwave Strip Transmission Line Sensor (1) of a unit according to any one of Claims 1 to 16 comprising the following steps:

- conversion of the analog measurement signals produced by the Microwave Strip Transmission Line Sensor (1) into digital signals
- periodic scanning of the digital signals,
- transformation of each of the periodically scanned signal portion into a Frequency Spectrum A(f),
- determination of a Frequency Barrier F of the respective current Frequency Spectrum A(f),
- calculation of the current speed or traveled distance of the moving user or object from the Frequency Barrier F of the respective current Frequency Spectrum A(f).

18. Process according to Claim 17, wherein the transformation of the signal portions into respective Frequency Spectrums A(f) is achieved by a multiplication of the respective signal portions with a Hamming Window and a subsequent Fourier Transformation of the multiplied signal parts.

19. Process according to Claim 17 or 18, wherein the determination of the Frequency Barrier F of the respective current Frequency Spectrum A(f) is achieved by the following steps:

a) determining a Threshold Indicator S, whereby S < A(f=0),

b) comparison of the Treshold Indicator S with the Frequency Spectrum A(f) from the frequency f=0 in the direction of increasing frequencies up to a predetermined frequency $f_G$,

c) determining a first frequency value $f_1$ at A $(f=f_1)=S$,

$d_1$) is A(f)<S for $f_1<f\leq f_G$: determining $f_1$ as the required Frequency Barrier F, otherwise

$d_2$) determining a second frequency value $f_2$ at A(f=$f_2$)=S, whereby $f_2>f_1$,

e) comparison of the Threshold Value shortage d=$f_2$ - $f_1$ with fixed values y and z, whereby y < z:

$f_1$) if d < y: ignore $f_1$ and $f_2$, further comparison of A(f) and S according to the steps c) et seqq. up to barrier frequency $f_G$,

$f_2$) if y < d$\leq$z: ignore the current Frequency Spectrum A(f),

$f_3$) if d > z: determine $f_1$ as the required Frequency Barrier F,

20. Process according to Claims 17 to 19, wherein the calculated speed value from the respective current Frequency Spectrum A(f) is subjected to a Plausibility Control with the following steps:

- estimation of the acceleration performance of the moving user or object according to the relation:

$$P = m(v^2_2 - v^2_1)/2 \, \Delta t$$

where m is the mass of the moving user or object, $v_1$ is the speed of the moving user or object calculated from the respective preceding Frequency Spectrum $A_1$(f), $v_2$ is the speed of the moving user or object calculated from the Current Frequency Spectrum $A_2$(f), and $\Delta t$ is the time passed between the scanning of both Frequency Spectrums,

- comparison of the determined acceleration performance P with a fixed upper and a fixed lower acceleration barrier ($P_{max}$ or $P_{min}$):

if P < $P_{min}$ or P > $P_{max}$: ignore the speed value $v_2$.

if $P_{min}$ < P < $P_{max}$: determine $v_2$ as the current speed value.

**Revendications**

1. Dispositif de mesure de la vitesse et du trajet parcouru d'un utilisateur ou d'un objet en mouvement à l'aide d'un capteur à radar Doppler, qui peut être fixé à un utilisateur ou un objet en mouvement, génère des signaux de mesure et les transmet à une unité d'évaluation (2) qui comprend un émetteur, lequel transmet les données évaluées à une unité séparée de traitement et d'affichage (8), **caractérisé en** ce que le capteur à radar Doppler est constitué par un capteur à micro-ondes à ruban (1) et en ce que sont prévus des moyens de conversion en signaux numériques des signaux analogiques générés par le capteur à micro-ondes à ruban (1), des moyens d'échantillonnage périodique des signaux numériques, des moyens de conversion des segments de signaux échantillonnés périodiquement en spectres de fréquences A(f) respectifs, des moyens de détermination d'une limite de fréquence F du spectre de fréquences A(f) en cours correspondant et des moyens de calcul de la vitesse en cours ou du trajet parcouru par l'utilisateur ou l'objet en mouvement à partir de la limite de fréquence F du spectre de fréquences A(f) en cours correspondant.

2. Dispositif suivant la revendication 1, **caractérisé en** ce que le capteur à micro-ondes à ruban (1) et l'unité d'évaluation (2) sont conçus de petite taille et portables.

3. Dispositif suivant la revendication 1 ou 2, **caractérisé en** ce que l'unité séparée de traitement et d'affichage (8) est conçue de petite taille et portable.

4. Dispositif suivant la revendication 3, **caractérisé en** ce que l'unité séparée de traitement et d'affichage (8) peut être fixée par un bracelet ou un moyen similaire à l'utilisateur en mouvement.

5. Dispositif suivant la revendication 1 ou 2, **caractérisé en** ce que l'unité de traitement et d'affichage (8) est conçue de manière stationnaire.

6. Dispositif suivant l'une des revendications 1 à 5, **caractérisé en ce** que le capteur à micro-ondes à ruban (1) et l'unité d'évaluation (2) sont disposés dans un boîtier qui peut être fixé à l'utilisateur ou à l'objet en mouvement à l'aide d'une ceinture élastique, d'une boucle ou d'un clip fixé au boîtier ou d'un dispositif semblable.

7. Dispositif suivant la revendication 6, **caractérisé en** ce que le capteur à micro-ondes à ruban (1) est disposé de telle manière dans le boîtier que le rayonnement émis par celui-ci vient frapper le sol en oblique lorsque le boîtier est fixé à l'utilisateur ou à l'objet.

8. Dispositif suivant l'une des revendications précédentes **caractérisé en** ce que l'unité d'évaluation (2) comporte au moins un préamplificateur (3), un convertisseur A/N (4), un microprocesseur (5) avec mémoires RAM et ROM et un émetteur (6).

9. Dispositif suivant l'une des revendications précédentes **caractérisé en** ce que l'unité d'évaluation (2) comporte un multiplexeur (7).

10. Dispositif suivant l'une des revendications précédentes **caractérisé en ce** que l'unité séparée de traitement et d'affichage (8) comporte une unité de réception (9) ainsi qu'un microprocesseur (10) avec mémoires RAM et ROM et une unité d'affichage (14).

11. Dispositif suivant l'une des revendications précédentes **caractérisé en** ce que le capteur à micro-ondes à ruban (1) présente une fréquence d'émission de 5,8 GHz.

12. Dispositif suivant l'une des revendications précédentes **caractérisé en** ce que le capteur à micro-ondes à ruban (1) et l'unité d'évaluation (2) sont combinés à un capteur d'accélération pour la mise hors service du capteur à micro-ondes à ruban en cas vitesse constante.

13. Dispositif suivant l'une des revendications précédentes **caractérisé en ce** que le capteur à micro-ondes à ruban (1) et l'unité d'évaluation (2) sont combinés avec un capteur de pression pour la compensation des erreurs de mesures provoquées par des différences d'altitude.

14. Dispositif suivant l'une des revendications précédentes **caractérisé en ce** que les moyens de conversion des segments de signaux en spectres de fréquences A(f) respectifs comprennent un moyen de multiplication de chaque segment de signal par une fenêtre de Hamming et un moyen pour effectuer une transformation ultérieure de Fourier des segments de signaux multipliés.

15. Dispositif suivant l'une des revendications précédentes **caractérisé en** ce que les moyens de détermination de la limite de fréquence F du spectre de fréquences en cours correspondant présentent:

a) des moyens de définition d'un niveau de seuil S, avec S < A(f = 0),
b) des moyens de comparaison du niveau de seuil S avec le spectre de fréquences A(f) depuis la fréquence f=0 dans la direction des fréquences croissantes jusqu'à une limite de fréquence prédéfinie $f_G$,
c) des moyens de définition d'une première valeur de fréquence $f_1$ pour A(f = $f_1$) = S,
$d_1$) des moyens de définition de $f_1$ comme étant la limite de fréquence cherchée F à la condition que A(f) < S pour $f_1 < f \leq f_G$,
$d_2$) des moyens de définition d'une deuxième valeur de fréquence $f_2$ pour A(f = $f_2$) = S, à la

condition que A(f) ne soit pas inférieur à S pour $f_1 < f \leq f_G$,
e) des moyens de comparaison du dépassement vers le bas de la valeur de seuil d = $f_2$ - $f_1$ avec des valeurs prédéfinies y et z, où y <z,
$f_1$) des moyens de rejet de $f_1$ et $f_2$ et des moyens de comparaison supplémentaire de A(f) et S correspondant aux étapes c) et suiv. jusqu'à la limite de fréquence $f_G$ à la condition que d < y,
$f_2$) des moyens de rejet du spectre de fréquences en cours A(f) à la condition que y < d ≤ z,
$f_3$) des moyens de définition de $f_1$ comme étant la limite de fréquence cherchée F à la condition que d > z.

16. Dispositif suivant l'une des revendications précédentes caractérisé en ce que des moyens sont prévus pour un contrôle de plausibilité de la valeur de la vitesse calculée à partir du spectre de fréquences en cours A(f), avec

- des moyens d'estimation de la performance d'accélération de l'utilisateur ou de l'objet en mouvement à l'aide de la relation:

$$P = m (v_2^2 - v_1^2)/2 \, \Delta t$$

où m est la masse de l'utilisateur ou de l'objet en mouvement, $v_1$ la vitesse de l'utilisateur ou de l'objet en mouvement calculée à partir du spectre de fréquences $A_1(f)$ correspondant, $v_2$ la vitesse de l'utilisateur ou de l'objet en mouvement calculée à partir du spectre de fréquences $A_2(f)$ en cours et $\Delta t$ le temps écoulé entre les échantillonnages des deux spectres de fréquence,
- des moyens de comparaison de la performance d'accélération P déterminée avec une limite supérieure prédéfinie et une limite inférieure prédéfinie d'accélération (respectivement $P_{max}$ et $P_{min}$), avec

- des moyens de rejet de la valeur de la valeur de la vitesse $v_2$ si P < $P_{min}$ ou P > $P_{max}$ et
- des moyens de définition de $v_2$ comme valeur de la vitesse en cours si $P_{min}$ < P < $P_{max}$.

17. Procédé de détermination de la vitesse et du trajet parcouru d'un utilisateur ou d'un objet en mouvement à partir de signaux de mesure générés par un capteur à micro-ondes à ruban (1) d'un dispositif suivant l'une des revendications 1 à 16, comportant les étapes suivantes:

- conversion des signaux de mesure analogiques produits par le capteur à micro-ondes à ruban (1) en signaux numériques,

- échantillonnage périodique des signaux numériques,
- conversion des segments de signaux détectés périodiquement en spectres de fréquence respectifs A(f),
- détermination d'une limite de fréquence F du spectre de fréquences A(f) respectif en cours,
- calcul de la vitesse réelle ou du trajet parcouru de l'utilisateur ou de l'objet en mouvement à partir de la limite de fréquence F du spectre de fréquences A(f) respectif en cours.

18. Procédé suivant la revendication 17, au cours duquel la conversion des segments de signaux en spectres de fréquences respectifs A(f) est effectuée au moyen d'une multiplication de chaque segment de signal par une fenêtre de Hamming et d'une transformation de Fourier subséquente des segments de signaux multipliés.

19. Procédé suivant la revendication 17 ou 18, au cours duquel la détermination de la limite de fréquence F du spectre de fréquences A(f) respectif en cours est réalisée à l'aide des étapes suivantes:

a) définition d'un niveau de seuil S, avec $S < A$ ($f = 0$),
b) comparaison du niveau de seuil S avec le spectre de fréquences A(f) depuis la fréquence $f=0$ dans la direction des fréquences croissantes jusqu'à une limite de fréquence prédéfinie $f_G$,
c) définition d'une première valeur de fréquence $f_1$ pour $A(f = f_1) = S$,
$d_1$) si $A(f) < f \leq f_G$ : définition de $f_1$ comme étant la limite de fréquence cherchée F, sinon
$d_2$) définition d'une deuxième valeur de fréquence $f_2$ pour $A(f = f_2) = S$, avec $f_2 > f_1$,
e) comparaison du dépassement vers le bas de la valeur de seuil $d = f_2 - f_1$ avec des valeurs prédéfinies y et z, où $y < z$,
$f_1$) si $d < y$: rejet de $f_1$ et $f_2$, comparaison supplémentaire de A(f) et S conformément aux étapes c) et suiv. jusqu'à la limite de fréquence $f_G$
$f_2$) si $y < d \leq z$: rejet du spectre de fréquences en cours A(f),
$f_3$) si $d > z$: définition de $f_1$ comme étant la limite de fréquence cherchée F.

20. Procédé suivant l'une des revendications 17 à 19, au cours duquel la valeur de la vitesse calculée à partir du spectre de fréquences en cours correspondant est soumise à un contrôle de plausibilité au moyen des étapes suivantes:

- estimation de la performance d'accélération de l'utilisateur ou de l'objet en mouvement à l'aide de la relation:

$$P = m \, (v_2^2 - v_1^2)/2 \, \Delta t$$

où m est la masse de l'utilisateur ou de l'objet en mouvement, $v_1$ la vitesse de l'utilisateur ou de l'objet en mouvement calculée à partir du spectre de fréquences $A_1(f)$ correspondant, $v_2$ la vitesse de l'utilisateur ou de l'objet en mouvement calculée à partir du spectre de fréquences $A_2(f)$ en cours et $\Delta t$ le temps écoulé entre les échantillonnages des deux spectres de fréquence,

- comparaison de la performance d'accélération P déterminée avec une limite supérieure prédéfinie et une limite inférieure prédéfinie d'accélération (respectivement $P_{max}$ et $P_{min}$):

si $P < P_{min}$ ou $P > P_{max}$: rejet de la valeur de la valeur de la vitesse $v_2$
si $P_{min} < P < P_{max}$: définition de $v_2$ comme valeur de la vitesse en cours.

Fig. 1

15

EP 0 775 321 B1

Fig. 2

Fig. 3

Fig. 4

Fig. 5a

Fig. 5b

EP 0 775 321 B1

Fig. 6

Fig. 7

Fig. 8

Fig. 9

EP 0 775 321 B1